# EUROPEAN PATENT SPECIFICATION

(11) **EP 2 840 071 B1**
(45) Date of publication and mention of the grant of the patent: **04.01.2017**
(21) Application number: 14179826.4
(22) Date of filing: 05.08.2014
(51) Int. Cl.: C03B 19/01, C03C 17/04, C03C 23/00, G02B 23/06, G02B 5/08

(54) **METHOD FOR MANUFACTURING ULTRA LOW EXPANSION GLASS MIRROR SUBSTRATE**
VERFAHREN ZUR HERSTELLUNG VON GLASSPIEGELSUBSTRAT MIT SEHR GERINGER AUSDEHNUNG
PROCÉDÉ DE FABRICATION D'UN SUBSTRAT EN MIROIR EN VERRE À TRÈS FAIBLE EXPANSION

(30) Priority: 21.08.2013 US 201361868277 P; 24.01.2014 US 201414162829
(43) Date of publication of application: 25.02.2015
(73) Proprietor: Goodrich Corporation, Charlotte, NC 28217-4578 (US)
(72) Inventor: Southard, Bari Marc, Danbury, CT 06810 (US)
(74) Representative: Hughes, Andrea Michelle

(56) References cited:
- US-A1- 2010 068 632
- US-A1- 2010 218 556
- US-A1- 2014 196 360
- DATABASE WPI Week 200630 Thomson Scientific, London, GB; AN 2006-288838 XP002733716, -& JP 2006 103988 A (ASAHI GLASS CO LTD) 20 April 2006 (2006-04-20)

## Description

### BACKGROUND OF THE INVENTION

### 1. Field of the Invention

The subject invention relates to a method for manufacturing a mirror substrate, and more particularly, to a method for manufacturing an ultra low expansion (ULE) glass mirror substrate using an additive manufacturing process.

### 2. Description of Related Art

The mirror substrate of a reflective telescope mirror is commonly made of low expansion borosilicate glass, because it is a very stable material. Glass can also be polished to a very smooth and precise surface without any granular structure. After the glass surface of the mirror substrate has been precisely polished, it is turned into a front surface mirror by applying a very thin metallic coating thereto. The function of the glass substrate is to hold the shape of this thin metal layer which reflects light for the telescope.

Mirror substrates are often made with an internal honeycomb structure to have low weight and high stiffness. For example, it is known that a honeycomb structure can reduce the weight of a mirror substrate by a factor of five to seven times, as compared to a solid mirror substrate of equal dimensions. This helps to reduce cost and extend the functionality of a telescope.

Borosilicate glass is used for casting the honeycomb mirror substrates, because it has a relatively low coefficient of thermal expansion. The working point of the borosilicate glass is low enough that it can be molded into a complex honeycomb structures at temperatures which are easy to obtain.

Mirror substrates for large reflecting telescopes are polished to precise paraboloidal or nearly paraboloidal shapes. This shape can focus star light into an image just above the mirror. The rough paraboloidal shape is formed when a mirror blank is cast in a spinning furnace. By spinning the furnace at the proper speed while the glass is molten, the surface of the mirror takes on a paraboloidal shape. By the time the cooling process is complete, this surface is typically accurate to a fraction of an inch.

Mirrors made of ultra low expansion (ULE) glass are also known in the art. They exhibit virtually no dimensional changes over extreme temperature variations. Consequently, they are typically used for astronomical optics, including mirrors and lenses for telescopes in both space and terrestrial settings. One of the most well-known examples of the use of ULE is in the Hubble telescope's mirror.

ULE has a very low coefficient of thermal expansion and contains as components silica and less than 10% titanium dioxide. Its high resistance to thermal expansion makes ULE very resistant to high temperature thermal shock.

JP2006103988 A discloses a method for manufacturing a mirror substrate, the method comprising the steps of providing a substrate surface layer formed from ULE glass, depositing a layer of powdered ULE glass, and sintering this layer at 1400-1700°C.

Additive manufacturing techniques are also known in the art, and have been used to manufacture a wide variety of mechanical components and parts, as well as finished end products. One form of additive manufacturing is called selective laser sintering (SLS), which involves the use of a high power laser (for example, a carbon dioxide laser) to fuse small particles of plastic, metal, ceramic or glass powders into a mass that has a desired three-dimensional shape.

In use, the laser selectively fuses the powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed.

Because finished part density depends on peak laser power, rather than laser duration, a SLS machine typically uses a pulsed laser. The SLS machine preheats the bulk powder material in the powder bed somewhat below its melting point, to make it easier for the laser to raise the temperature of the selected regions the rest of the way to the melting point.

Compared with other methods of additive manufacturing, SLS can produce parts from a relatively wide range of commercially available powder materials. These include polymers such as nylon (neat, glass-filled, or with other fillers) or polystyrene, metals including steel, titanium, alloy mixtures, and composites and green sand. The physical process can be full melting, partial melting, or liquid-phase sintering. Depending on the material, up to 100% density can be achieved with material properties comparable to those from conventional manufacturing methods.

It would be beneficial to provide a method for additively manufacturing a mirror substrate using an ultra low expansion glass that exhibits characteristics of light weight and high stiffness and is suitable for use in astronomical telescopes.

### SUMMARY OF THE INVENTION

The subject invention is directed to a new and useful method (claim 1) of manufacturing a mirror substrate, that includes the steps of providing a polishable substrate surface layer formed from ultra low expansion (ULE) glass, depositing successive layers of powdered ULE glass onto the polishable substrate surface layer, and selectively lasing each successive layer of powdered ULE glass to produce successive fused layers of ULE glass joined to one another to form a mirror substrate having an optimized three-dimensional topology.

Preferably, the polishable substrate surface layer has a prescribed geometry, such as for example a curved or paraboloidal surface geometry. It is envisioned that the step of selectively lasing each successive layer of powered ULE glass could involve either selective laser sintering, selective laser melting, or a similar laser-based additive manufacturing process.

The method of the subject invention also includes the step of optimizing the three-dimensional topology of the mirror substrate to obtain a specific stiffness for a given weight. For example, the optimized three-dimensional topology of the mirror substrate can be a ribbed structure or a honeycomb structure. It is also important to optimize the topology of the mirror substrate for minimal surface deformation in gravity, which is critical for metrology of space based telescope systems, as well as ground based systems in general. The subject invention is also directed to an optimized mirror substrate manufactured in accordance with the preceding method steps.

The subject invention is also directed to a method (claim 8) of manufacturing a mirror that includes the steps of providing a polishable substrate surface layer formed from ULE glass and having a prescribed surface geometry, depositing successive layers of powdered ULE glass onto the polishable substrate surface layer, selectively lasing each successive layer of powdered ULE glass to produce successive fused layers of ULE glass joined to one another to form a mirror substrate having an optimized three-dimensional topology, and providing the substrate surface layer with a reflective surface.

Preferably, the step of providing the substrate surface layer with a reflective surface includes the step of polishing the substrate surface layer, and the step of applying a reflective material to the polished substrate surface layer. More particularly, the step of applying a reflective material to the polished substrate surface layer includes applying a metalized coating to the polished substrate surface layer. The subject invention is also directed to a mirror having an optimized substrate that is manufactured according to the preceding method steps.

These and other features of the subject invention and the manner in which it is employed will become more readily apparent to those having ordinary skill in the art from the following enabling description of the preferred embodiments of the subject invention taken in conjunction with the several drawings described below.

### BRIEF DESCRIPTION OF THE DRAWINGS

So that those skilled in the art to which the subject invention appertains will readily understand how to make and use the subject invention without undue experimentation, preferred embodiments thereof will be described in detail herein below by way of example only and with reference to certain figures, wherein:
Fig. 1 is a schematic representation of a selective lasing operation in which an initial layer of powdered ULE glass is fused to a polishable mirror substrate surface layer; and
Fig. 2 depicts an example of an optimized mirror substrate having a ribbed structure.

### DETAILED DESCRIPTION OF PREFERRED EMBODIMENTS

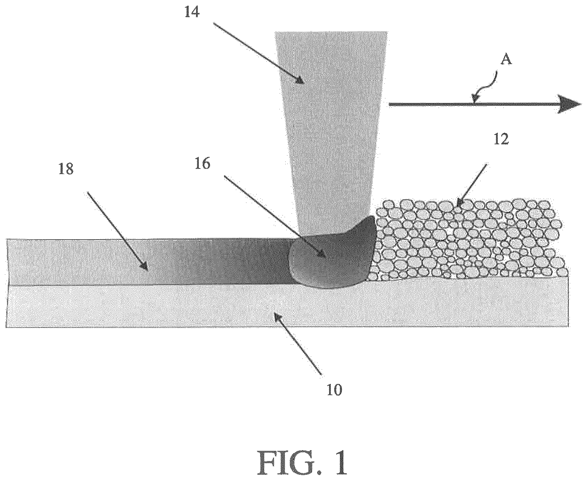

Referring now to the drawings wherein like reference numerals identify similar structural features or aspects of the subject invention, there is illustrated in Fig. 1 a schematic representation of a selective lasing operation for additively manufacturing an optimized mirror substrate in accordance with the method of the subject invention. The mirror substrate manufactured in accordance with the methodology of the subject invention is particularly useful in the construction, maintenance and/or repair of astronomical telescopes, including spaced-based and terrestrial-based telescopes

It is envisioned that the selective lasing process employed with the subject invention is either a selective laser sintering (SLS) process, a selective laser melting (SLM) process, or another suitable additive manufacturing technique known in the art. A method and apparatus for performing a selective lasing operation is disclosed, for example, in U.S. Patent No. 4,863,538 to Deckard.

Referring to Fig. 1, in performing the additive manufacturing method of the subject invention, a polishable mirror substrate surface layer 10 formed from ultra low expansion (ULE) glass is initially provided. It is envisioned that the substrate surface layer 10 would be provided on the surface of a powder bed of the SLS/SLM machine. The substrate layer 10 provides an initial platform to build structural features (e.g., ribbed structures) upon and has a prescribed surface geometry depending upon the application and operating environment. For example, in applications where the mirror substrate is intended for use as the primary mirror of a space-based astronomical telescope, the polishable substrate surface layer would have a curved, concave or nearly paraboloidal surface geometry. Alternatively, in applications where the mirror substrate is intended for use as the secondary mirror of a space-based astronomical telescope, the polishable substrate surface layer would have a curved or convex surface geometry or possibly a flat or planar surface geometry, depending upon the design of the telescope.

After providing the initial polishable mirror substrate surface layer 10 on the powder bed of the SLS/SLM machine, a layer of powdered ULE glass 12 is subsequently deposited onto the polishable substrate surface layer 10. The layer of powdered ULE glass 12 is then selectively lased using a high power laser 14 (e.g., a carbon dioxide laser), which creates a localized melt pool 16 supported by the neighboring glass powder 12. As the laser 14 scans in the direction of arrow A, it progressively transforms the small particles of ULE glass 12 into a fused mass or layer 18 that has a desired or predefined three-dimensional shape.

Thereafter, successive layers of powdered ULE glass are deposited one by one and the laser 14 selectively fuses the powdered material by scanning cross-sections generated from a three-dimensional description of the mirror substrate (for example a CAD file or scan data). As a result, successive fused layers of ULE glass are joined to one another, and the additive manufacturing process is repeated until the entire mirror substrate having an optimized three-dimensional topology is completed. Those skilled in the art will readily appreciate that the formation of curved surface layers within the mirror substrate can be managed by actively controlling the focus of the laser 14 or by actively controlling the vertical axis on laser.

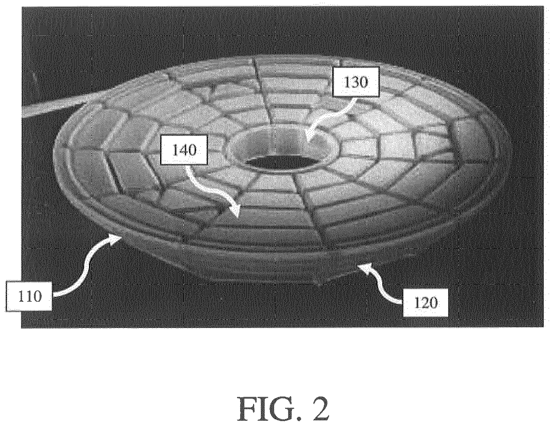

The optimization of the three-dimensional topology of the mirror substrate is done to obtain a specific stiffness for a given weight. For example, the optimized three-dimensional topology of the mirror substrate can be a ribbed structure as shown for example in Fig. 2, or a honeycomb structure as is known in the art. It is also important to optimize the topology of the mirror substrate for minimal surface deformation in gravity, which is critical for metrology of space based telescope systems, as well as ground based systems in general.

The optimized mirror substrate of the subject invention is constructed from ULE glass because ULE glass exhibits virtually no dimensional changes over extreme temperature variations. Indeed, ULE glass has a coefficient of thermal expansion of about 10⁻⁸/K at 5-35 °C. Other characteristics includes a thermal conductivity of 1.31 w/(m • °C), thermal diffusion of 0.0079 cm²/s, a mean specific heat of 767 J/ (kg • °C), a strain point of 890 °C [1634 °F], an estimated softening point of 1490 °C [2714 °F], and an annealing point of 1000 °C [1832 °F]. Also, ULE glass powder is recyclable, enabling very little material waste, which lowers material costs during production.

While other optical quality glasses are known, they tend to fracture or lose their mechanical properties when utilized in an SLS/SLM process as described. This is not the case however with ULE glass, which makes it so desirable for this purpose.

Referring now to Fig. 2, there is illustrated an example of an optimized mirror substrate 110 that can be manufactured by the additive manufacturing process of the subject invention, using either SLS or SLM techniques. By way of a non-limiting example, the mirror substrate 110 is constructed in the form of a primary telescope mirror and includes a polishable substrate surface layer 120 having a curved or nearly paraboloidal surface geometry. The mirror substrate 110 further incudes an additively manufactured outer periphery 130 defined by a series of spaced apart hoops or belts. A central cylindrical hub 140 is additively formed at the center of the mirror substrate to define an aperture for allowing the passage of light therethrough to a secondary mirror of the telescope.

The subject invention is also directed to a method of manufacturing a mirror that includes the step of providing the polishable substrate surface 120 with a reflective surface finish. This treatment involves the initial step of polishing the substrate surface layer 120. This may be accomplished first by generated a precise prescribed shape with a numerically-controlled milling machine. The prescribed shape can be generated with a loose abrasive grind, or it may be generated using a spinning tool impregnated with diamond particles. Other grinding techniques known in the art can also be used. The grinding procedure improves the surface accuracy of the substrate surface 120 to about 50 microns (0.002 inch). The final shape of the substrate surface layer 120 is produced by polishing with a lap using a very fine polishing compound. This final shape is carefully polished to an accuracy of better than 25 nanometers (1.0 x 10⁻⁶ inch).

Those skilled in the art will appreciate that the substrate surface layer 120 should be polished to its precise prescribed shape within approximately 1/25 of the wavelength of light. For typical blue light, that means a surface accuracy of order 15-20 nanometers (less than 1.0 x 10⁻⁶ inch). Any small scale roughness (the lack of a good polish) will cause the light to be scattered and result in reduced contrast. Inaccuracies on larger scales, such as bending of the entire mirror, can result in an inability to focus the light into sharp images.

The method further includes the step of applying a reflective material to the polished substrate surface layer 120. More particularly, the step of applying a reflective material to the polished substrate surface layer includes applying a metalized coating to the polished substrate surface layer 120.

Aluminum is often used for this purpose, although silver or gold may be used depending upon the application and/or operating environment. The thickness of the metallized coating is typically ∼ 100 nm (4.0 x 10⁻⁶ inch) thick and weighs only a few grams. The metallized coating is applied in a vacuum chamber by evaporating a small amount of metal and allowing it to bond to the clean glass surface.

The additive manufacturing methods of the subject invention produce far thinner ribs and more optimized (complex) geometry than has been possible using conventional machining methods. The subject method also enables more efficient designs, and the formation of useful metrology/tooling features on the mirror substrate. For example, forming mount features or sections would not be an issue, and complex geometries to minimize stress are also possible using such additive manufacturing techniques.

There is also the potential to achieve greater production rates. For example, it is envisioned that the additive manufacturing process of the subject invention could produce a mirror substrate having a 4 m² core in three to four weeks' time, which is two orders of magnitude faster than could be achieved in mold casting production. This results in lower labor costs. There is also a lower manufacturing risk, since little or no mechanical stress is applied to the mirror substrate during the additive manufacturing process.

While the subject invention has been shown and described with reference to certain exemplary embodiments, such as the primary mirror substrate illustrated in Fig. 2 which has an optimized ribbed structure, those skilled in the art will readily appreciate that various changes and/or modifications may be made thereto without departing from the scope of the subject invention as defined by the appended claims.

## Claims

1. A method of manufacturing a mirror substrate, comprising the steps of:
a) providing a polishable substrate surface layer (10) formed from ultra low expansion glass;
b) depositing successive layers of powdered ultra low expansion glass (12) onto the polishable substrate surface layer (10); and
c) selectively lasing each successive layer of powdered ultra low expansion glass (12) to produce successive fused layers of ultra low expansion glass joined to one another to form a mirror substrate having an optimized three-dimensional topology.

2. A method according to Claim 1, wherein the polishable substrate surface layer (10) is provided with a prescribed geometry.

3. A method according to any preceding claim, wherein the step of selectively lasing comprises selective laser sintering, or wherein the step of selectively lasing comprises selective laser melting.

4. A method according to any preceding claim, further comprising the step of optimizing the three-dimensional topology of the mirror substrate to obtain a specific stiffness for a given weight.

5. A method according to Claim 4, wherein the optimized three-dimensional topology of the mirror substrate is a ribbed structure.

6. A method according to Claim 1, further comprising the step of polishing the substrate surface layer (10).

7. A method according to Claim 6, further comprising the step of applying a reflective material to the polished substrate surface layer (10), and preferably wherein the step of applying a reflective material to the polished substrate surface layer (10) includes applying a metalized coating to the polished substrate surface layer (10).

8. A method of manufacturing a mirror, comprising the steps of:
a) manufacturing a mirror substrate according to the method of any of claims 1-7;
b) providing the substrate surface layer (10) with a reflective surface.

9. A method according to Claim 8, wherein the prescribed geometry of the polishable substrate surface layer (10) is a curved surface geometry.

10. A method according to Claims 8-9 , wherein the step of selectively lasing comprises selective laser sintering, or wherein the step of selectively lasing comprises selective laser melting.

11. A method according to Claims 8-10, further comprising the step of optimizing the three-dimensional topology of the mirror substrate to obtain a specific stiffness for a given weight, and preferably wherein the optimized three-dimensional topology of the mirror substrate is a ribbed structure.

12. A method according to Claims 8-11, wherein the step of providing the substrate surface layer with a reflective surface includes the step of polishing the substrate surface layer.

13. A method according to Claim 12, further comprising the step of applying a reflective material to the polished substrate surface layer (10), and preferably wherein the step of applying a reflective material to the polished substrate surface layer (10) includes applying a metalized coating to the polished substrate surface layer (10).

## Patentansprüche

1. Verfahren zur Herstellung eines Spiegelsubstrats, umfassend die folgenden Schritte:
a) Bereitstellen einer polierbaren Substratoberflächenschicht (10), die aus Glas mit sehr geringer Ausdehnung gebildet ist;
b) Abscheiden von aufeinanderfolgenden Schichten aus pulverisiertem Glas mit sehr geringer Ausdehnung (12) auf die polierbare Substratoberflächenschicht (10); und
c) selektives Lasern jeder aufeinanderfolgenden Schicht aus pulverisiertem Glas mit sehr geringer Ausdehnung (12), um aufeinanderfolgende verschmolzene Schichten aus Glas mit sehr geringer Ausdehnung, die miteinander verbunden sind, zu erzeugen, um ein Spiegelsubstrat mit einer optimierten dreidimensionalen Topologie auszubilden.

2. Verfahren nach Anspruch 1, wobei die polierbare Substratoberflächenschicht (10) mit einer vorgegebenen Geometrie versehen ist.

3. Verfahren nach einem der vorstehenden Ansprüche, wobei der Schritt des selektiven Laserns selektives Lasersintern umfasst oder wobei der Schritt des selektiven Laserns selektives Laserschmelzen umfasst.

4. Verfahren nach einem der vorstehenden Ansprüche, ferner umfassend den Schritt des Optimierens der dreidimensionalen Topologie des Spiegelsubstrats, um eine bestimmte Steifigkeit für ein vorgegebenes Gewicht zu erhalten.

5. Verfahren nach Anspruch 4, wobei die optimierte dreidimensionale Topologie des Spiegelsubstrats eine Rippenstruktur ist.

6. Verfahren nach Anspruch 1, ferner umfassend den Schritt des Polierens der Substratoberflächenschicht (10).

7. Verfahren nach Anspruch 6, ferner umfassend den Schritt des Aufbringens eines reflektierenden Materials auf die polierte Substratoberflächenschicht (10), und wobei der Schritt des Aufbringens eines reflektierenden Materials auf die polierte Substratoberflächenschicht (10) vorzugsweise ein Aufbringen einer metallisierten Beschichtung auf die polierte Substratoberflächenschicht (10) umfasst.

8. Verfahren zur Herstellung eines Spiegels, umfassend die folgenden Schritte:
a) Herstellen eines Spiegelsubstrats gemäß dem Verfahren nach einem der Ansprüche 1 bis 7;
b) Ausstatten der Substratoberflächenschicht (10) mit einer reflektierenden Oberfläche.

9. Verfahren nach Anspruch 8, wobei die vorgegebene Geometrie der polierbaren Substratoberflächenschicht (10) eine gekrümmte Oberflächengeometrie ist.

10. Verfahren nach den Ansprüchen 8 bis 9, wobei der Schritt des selektiven Laserns selektives Lasersintern umfasst oder wobei der Schritt des selektiven Laserns selektives Laserschmelzen umfasst.

11. Verfahren nach den Ansprüchen 8 bis 10, ferner umfassend den Schritt des Optimierens der dreidimensionalen Topologie des Spiegelsubstrats, um eine bestimmte Steifigkeit für ein vorgegebenes Gewicht zu erhalten, und wobei die optimierte dreidimensionale Topologie des Spiegelsubstrats vorzugsweise eine Rippenstruktur ist.

12. Verfahren nach den Ansprüchen 8 bis 11, wobei der Schritt des Ausstattens der Substratoberflächenschicht mit einer reflektierenden Oberfläche den Schritt des Polierens der Substratoberflächenschicht umfasst.

13. Verfahren nach Anspruch 12, ferner umfassend den Schritt des Aufbringens eines reflektierenden Materials auf die polierte Substratoberflächenschicht (10), und wobei der Schritt des Aufbringens eines reflektierenden Materials auf die polierte Substratoberflächenschicht (10) vorzugsweise das Aufbringen einer metallisierten Beschichtung auf die polierte Substratoberflächenschicht (10) umfasst.

## Revendications

1. Procédé de fabrication d'un substrat en miroir, comprenant les étapes de :
a) fourniture d'une couche de surface de substrat polissable (10) formée de verre à très faible expansion ;
b) dépôt de couches successives de verre à très faible expansion pulvérisé (12) sur la couche de surface de substrat polissable (10) ; et
c) production d'un effet laser sélectif sur chaque couche successive de verre à très faible expansion pulvérisé (12) pour produire des couches réunies par fusion successives de verre à très faible expansion assemblées les unes aux autres pour former un substrat en miroir présentant une topologie en trois dimensions optimisée.

2. Procédé selon la revendication 1, dans lequel la couche de surface de substrat polissable (10) présente une géométrie prédéfinie.

3. Procédé selon une quelconque revendication précédente, dans lequel l'étape de production d'un effet laser sélectif comprend un frittage laser sélectif, ou dans lequel l'étape de production d'un effet laser sélectif comprend une fusion sélective par laser.

4. Procédé selon une quelconque revendication précédente, comprenant en outre l'étape d'optimisation de la topologie en trois dimensions du substrat en miroir pour obtenir une rigidité spécifique pour un poids donné.

5. Procédé selon la revendication 4, dans lequel la topologie en trois dimensions optimisée du substrat en miroir est une structure nervurée.

6. Procédé selon la revendication 1, comprenant en outre l'étape de polissage de la couche de surface de substrat (10).

7. Procédé selon la revendication 6, comprenant en outre l'étape d'application d'un matériau réfléchissant sur la couche de surface de substrat polie (10), et de préférence dans lequel l'étape d'application d'un matériau réfléchissant sur la couche de surface de substrat polie (10) comprend l'application d'un revêtement métallisé sur la couche de surface de substrat polie (10).

8. Procédé de fabrication d'un miroir, comprenant les étapes de :
a) fabrication d'un substrat en miroir selon le procédé selon l'une quelconque des revendications 1-7 ;
b) fourniture d'une surface réfléchissante à la couche de surface de substrat (10).

9. Procédé selon la revendication 8, dans lequel la géométrie prédéfinie de la couche de surface de substrat polissable (10) est une géométrie de surface incurvée.

10. Procédé selon les revendications 8 à 9, dans lequel l'étape de production d'un effet laser sélectif comprend un frittage laser sélectif, ou dans lequel l'étape de production d'un effet laser sélectif comprend une fusion sélective par laser.

11. Procédé selon les revendications 8 à 10, comprenant en outre l'étape d'optimisation de la topologie en trois dimensions du substrat en miroir pour obtenir une rigidité spécifique pour un poids donné, et de préférence dans lequel la topologie en trois dimensions optimisée du substrat en miroir est une structure nervurée.

12. Procédé selon les revendications 8 à 11, dans lequel l'étape de fourniture d'une surface réfléchissante à la couche de surface de substrat comprend l'étape de polissage de la couche de surface de substrat.

13. Procédé selon la revendication 12, comprenant en outre l'étape d'application d'un matériau réfléchissant sur la couche de surface de substrat polie (10), et de préférence dans lequel l'étape d'application d'un matériau réfléchissant sur la couche de surface de substrat polie (10) comprend l'application d'un revêtement métallisé sur la couche de surface de substrat polie (10).
